# EUROPÄISCHE PATENTSCHRIFT

(11) **EP 3 653 902 B1**
(45) Veröffentlichungstag und Bekanntmachung des Hinweises auf die Patenterteilung: **29.09.2021**
(21) Anmeldenummer: 19209471.2
(22) Anmeldetag: 15.11.2019
(51) Int. Cl.: F16D 65/12, B60T 5/00

(54) **ZENTRIERRING FÜR EINE WELLENBREMSSCHEIBE EINES SCHIENENFAHRZEUGS UND WELLENBREMSSCHEIBE FÜR EIN SCHIENENFAHRZEUG MIT EINEM ZENTRIERRING**
CENTERING RING FOR A SHAFT BRAKE DISK OF A RAIL VEHICLE AND SHAFT BRAKE DISK FOR A RAIL VEHICLE COMPRISING A CENTERING RING
ANNEAU DE CENTRAGE POUR UN DISQUE DE FREIN D'ESSIEUX D'UN VÉHICULE FERROVIAIRE ET DISQUE DE FREIN D'ESSIEUX POUR UN VÉHICULE FERROVIAIRE DOTÉ D'UN ANNEAU DE CENTRAGE

(30) Priorität: 16.11.2018 DE 102018128793
(43) Veröffentlichungstag der Anmeldung: 20.05.2020
(73) Patentinhaber: Faiveley Transport Witten GmbH, 58454 Witten (DE)
(72) Erfinder: MONTUA, Sebastian A., 34233 Fuldatal (DE); NATHAUS, Christopher, 50968 Köln (DE)
(74) Vertreter: RGTH

(56) Entgegenhaltungen:
- EP-A2- 1 375 953
- WO-A1-01/96758
- WO-A1-2010/115527
- CN-A- 108 317 190
- CN-B- 105 065 515
- DE-A1-102014 107 228
- DE-B3-102012 110 454
- US-A1- 2012 247 882

## Beschreibung

Die vorliegende Erfindung betrifft einen Zentrierring für eine Wellenbremsscheibe eines Schienenfahrzeugs, umfassend einen Ringkörper mit einem Außenrand und einem Innenrand, wobei der Ringkörper eben ausgebildet ist.

Darüber hinaus betrifft die vorliegende Erfindung eine Wellenbremse für ein Schienenfahrzeug umfassend einen Zentrierring.

### Technologischer Hintergrund

Wellenbremsscheiben für Schienenfahrzeuge umfassen üblicherweise eine Nabe, welche auf einer Welle, beispielsweise einer Achswelle, eines Schienenfahrzeugs angeordnet ist. An der Nabe sind Reibringe befestigt. Zur Einleitung eines Bremsvorgangs werden Bremsbeläge mittels Bremszylindern an die Reibringe gepresst. Durch die zwischen den Bremsbelägen und den Reibringen auftretende Reibung wird die kinetische Energie des Schienenfahrzeugs in Wärmeenergie umgewandelt, bis das Schienenfahrzeug zum Stehen kommt. Die bei einem Bremsvorgang auftretende und von den Reibringen aufgenommene Wärmeenergie führt zu einer thermischen Ausdehnung der Reibringe. Um der thermischen Ausdehnung entgegen zu wirken, müssen die Reibringe an der Nabe zentriert werden.

Ferner führt die thermische Ausdehnung der Reibringe zu Biegebeanspruchungen auf die Verbindungsschrauben der Reibringe mit der Nabe. In Folge der Biegebeanspruchungen können die Verbindungschrauben versagen und brechen.

Aus der WO 2014/067655 A1 ist eine Wellenbremsscheibe eines Schienenfahrzeugs mit einem Anschlusselement wie einer Nabe bekannt. Die Verbindung der Wellenbremsscheibe mit einer fahrzeugseitigen Nabe, wobei die Wellenbremsscheibe einen Reibring und einen an dessen Innenumfang angeformten Flansch aufweist, der an der Nabe befestigt ist, ist so ausgebildet, dass an den Flansch und die Nabe eine Vielzahl von über den Umfang verteilt, aus Blech geformten Laschen angeschlossen sind. Die Laschen wirken in radialer Richtung aufgrund der materialbedingten Elastizität als Federelemente, um die radiale thermische Ausdehnung des Reibrings ausgleichen zu können.

Aus der EP 0 777 062 A1 ist ein Spannring zur Befestigung von insbesondere Wellenbremsscheiben von Schienenfahrzeugen bekannt. Zur Befestigung der Wellenbremsscheibe an einer Welle ist ein Spannring vorgesehen, welcher von Befestigungsschrauben durchsetzt ist, wobei sich die Befestigungsschrauben durch fluchtende Bohrungen eines inneren Ringflansches der Bremsscheibe erstrecken und gegenüber Flanschelementen der Welle verspannbar sind.

Aus der WO 2013/087323 A1 der Anmelderin ist eine gebaute Wellenbremsscheibe bekannt, welche eine Nabe und zwei aus Stahlwerkstoff hergestellte Reibringe aufweist. Die Reibringe sind parallel und beabstandet zueinander angeordnet. Um eine gute Innenbelüftung zu ermöglichen sind zwischen den Reibringen Stützbolzen zur Aufnahme einer axial wirkenden Belaganpresskraft angeordnet. Ferner weist die gebaute Wellenbremsscheibe einen Befestigungs- oder Zentrierring auf, welcher auf der Außenseite der Reibringe im radial inneren Bereich anliegt. Zur Befestigung der Reibringe an der Nabe sind Verbindungsschrauben durch Löcher in den Reibringen sowie durch Löcher in Nocken der Nabe durchgeführt.

Aus der CN 105 065 515 B ist eine auf einer Hochgeschwindigkeitszugwelle montierte Bremsscheibe mit einer Gleitstruktur bekannt. Die Bremsscheibe umfasst einen Scheibenkörper, eine Scheibennabe, Pressplatten und Befestigungselemente. Der Scheibenkörper und die Scheibennabe sind jeweils mit Zähnen versehen, die in Umfangsrichtung gleichmäßig verteilt sind. Jeder Zahn ist mit einem Installationsloch versehen.

Aus der EP 1 375 953 A2 ist eine aus mehreren Teilen bestehende Bremsscheibe bekannt, wobei ein Reibring mit einem Tragteil lösbar gekoppelt ist. Ein Befestigungsring oder zwei Befestigungsringe sind mit einer Außenverzahnung versehen, die mit einer Innenverzahnung des Reibringes zusammenwirkt.

Ein radial in einem inneren Bereich an den Reibringen anliegender Befestigungs- oder Zentrierring behindert ein Einströmen von Kühlluft in den Zwischenraum zwischen den Reibringen. Es bildet sich eine unsymmetrische Durchströmung des Zwischenraums zwischen den Reibringen aus, wodurch die Kühlleistung der Reibringe verringert wird und somit die Belastungen auf die Verbindungselemente der Reibringe mit der Nabe zunehmen.

### Darstellung der Erfindung: Aufgabe, Lösung, Vorteile

Der vorliegenden Erfindung liegt die Aufgabe zugrunde, einen Zentrierring für eine Wellenbremsscheibe eines Schienenfahrzeugs umfassend einen Ringkörper mit einem Außenrand und einem Innenrand, wobei der Ringkörper eben ausgebildet ist, bereitzustellen, mit welchem die Belüftung einer Wellenbremsscheibe erheblich verbessert und eine symmetrischere Kühlluftströmung im Inneren der Wellenbremsscheibe ausgebildet wird.

Ferner liegt der vorliegenden Erfindung die Aufgabe zugrunde, eine Wellenbremsscheibe bereitzustellen, mit der die vorgenannten Vorteile erzielt werden.

Zur Lösung der der Erfindung zugrundeliegenden Aufgabe wird ein Zentrierring für eine Wellenbremsscheibe eines Schienenfahrzeugs umfassend einen Ringkörper mit einem Außenrand und einem Innenrand, wobei der Ringkörper eben ausgebildet ist, vorgeschlagen, wobei der Ringkörper über den Außenrand verteilte Aussparungen und Vorsprünge aufweist, wobei der Ringkörper Befestigungslöcher aufweist, und wobei jedes Befestigungsloch in je einem Vorsprung angeordnet ist.

Der Zentrierring weist einen Ringkörper, das heißt einen im Wesentlichen ringförmig ausgestalteten Körper, auf. In einer Seitenansicht weist der Ringkörper einen Außenrand und einen Innenrand auf. Über den Außenrand verteilt sind Aussparungen und Vorsprünge am Ringkörper ausgebildet. Aufgrund der Aussparung und Vorsprünge ist der Außenrand des Ringkörpers des Zentrierrings nicht kreisförmig sondern in Umfangsrichtung in etwa wellenförmig ausgebildet. Der Innenrand ist hingegen bevorzugt kreisförmig ausgebildet.

Der Ringkörper ist eben ausgebildet, das heißt, der Ringkörper erstreckt sich in einer Ebene, sodass der Zentrierring beziehungsweise dessen Ringkörper bevorzugt aus einem Flachmaterial hergestellt werden kann.

Aus dem Stand der Technik bekannte, an Wellenbremsscheiben angeordnete Zentrierringe ohne Aussparungen oder Vorsprünge behindern das Einströmen von Kühlluft zwischen die Reibringe der Wellenbremsscheibe von der Seite, an der der Zentrierring angeordnet ist.

Bei dem an einer Wellenbremsscheibe angeordneten erfindungsgemäßen Zentrierring kann hingegen Kühlluft durch die Aussparungen an dem Zentrierring vorbeiströmen und in einen Zwischenraum zwischen den Reibringen der Wellenbremsscheibe einströmen. Ferner kann eine Erhöhung der Strömungsgeschwindigkeit der einströmenden Kühlluft erzielt werden. Aus der Erhöhung der Strömungsgeschwindigkeit resultiert eine Erhöhung des Volumenstroms der Kühlluft zwischen den Reibringen um bis zu 20 %. Der erhöhte Volumenstrom führt zu einem besseren Abkühlverhalten der Wellenbremsscheibe sowie zu einer reduzierten Maximaltemperatur der Wellenbremsscheibe bei einem Bremsvorgang.

Aufgrund der verbesserten Belüftung der Wellenbremsscheibe und des verbesserten Abkühlverhaltens werden thermische Ausdehnungen der Reibringe und Biegebelastungen auf die Verbindungselemente zwischen den Reibringen und einer Nabe verringert. Ferner gestattet es der Zentrierring, dass beidseitig Kühlluft in die Wellenbremsscheibe einströmen kann, so dass eine insgesamt symmetrischere Kühlluftströmung zwischen den Reibringen ausgebildet wird, wodurch eine gleichmäßigere Kühlung erhalten wird.

Da jeder der Vorsprünge ein Befestigungsloch aufweist, kann eine besonders stabile Verbindung des Zentrierringes mit einer Wellenbremsscheibe beziehungsweise mit einer Nabe einer Wellenbremsscheibe erhalten werden.

Bevorzugt ist vorgesehen, dass zwischen jeweils zwei über den Außenrand benachbart angeordneten Aussparungen je ein Vorsprung ausgebildet ist.

Mit anderen Worten werden die Vorsprünge gewissermaßen durch die Aussparungen definiert und umgekehrt werden die Aussparungen durch die Vorsprünge definiert. Der Außenrand ist in Umfangsrichtung des Ringkörpers gesehen in etwa wellenförmig ausgestaltet, wobei jeweils ein in Richtung des Mittelpunkts des Zentrierrings gerichtetes Wellental einer Aussparung entspricht bzw. diese ausbildet bzw. begrenzt und wobei ein in radialer Richtung nach außen gerichteter Wellenberg einem Vorsprung entspricht oder diesen ausbildet bzw. begrenzt. Die Vorsprünge können daher bei der Herstellung des Zentrierrings einfach durch Vorsehen der Aussparungen bereitgestellt werden, ohne dass ein separater Herstellungsschritt für die Herstellung der Vorsprünge notwendig ist.

Mit weiterem Vorteil ist vorgesehen, dass die Aussparungen im Wesentlichen halbkreisförmig ausgebildet sind.

Eine halbkreisförmige Ausgestaltung der Aussparungen ist einerseits verfahrenstechnisch leicht herzustellen und bietet andererseits einen optimalen Kompromiss zwischen der Stabilität des Zentrierrings und der Gewährleistung der Erhöhung des Volumenstroms zwischen den Reibringen einer Wellenbremsscheibe. Die Aussparungen können jedoch auch jede andere geeignete Form aufweisen. Beispielsweise können die Aussparungen in etwa rechteckig oder halboval ausgebildet sein. Die Aussparungen sind ferner bevorzugt konkav nach innen auf den Mittelpunkt Ringkörpers des Zentrierrings ausgerichtet.

Mit weiterem Vorteil kann vorgesehen sein, dass eine ungerade Anzahl an Aussparungen und/oder dass eine ungerade Anzahl an Vorsprüngen vorgesehen ist.

Durch die ungerade Anzahl von Aussparungen und/oder Vorsprüngen werden Resonanzen vermieden, sodass im Betrieb einer Wellenbremsscheibe mit dem Zentrierring Schwingungen verringert werden.

Mit weiterem Vorteil sind mindestens fünf, bevorzugt mindestens sieben, weiter bevorzugt mindestens neun, insbesondere bevorzugt neun, Aussparungen und/oder Vorsprünge vorgesehen.

Bevorzugt sind die Befestigungslöcher Durchgangsbohrungen.

Zur Befestigung des Zentrierrings an einer Wellenbremsscheibe können Verbindungselemente durch die Befestigungslöcher des Ringkörpers geführt. Die Verbindungselemente sind zu diesem Zweck zudem bevorzugt durch Löcher in Nocken an einer Nabe der Wellenbremsscheibe sowie durch Löcher in den Reibringen geführt. Die Verbindungselemente können Verbindungsschrauben sein.

Bevorzugt weisen die Befestigungslöcher alle den gleichen Abstand zu dem Mittelpunkt des Ringkörpers auf. Die Befestigungslöcher sind folglich auf einem Kreis um den Mittelpunkt des Ringkörpers angeordnet.

Zusätzlich kann vorgesehen sein, dass die Befestigungslöcher in einem äußeren Bereich der Vorsprünge angeordnet sind.

Die zwischen den Aussparungen angeordneten Vorsprünge werden von einem angrenzenden Bereich des Innenrandes sowie einem in etwa wellenbergartig geformten Bereich des Außenrandes begrenzt. Die Befestigungslöcher sind bevorzugt bezüglich der radialen Breite der Vorsprünge in deren äußeren Bereich angeordnet, das heißt, dass die Befestigungslöcher in radialer Richtung gesehen in der radial äußeren Hälfte der Vorsprünge angeordnet sind.

Durch die Anordnung der Befestigungslöcher im äußeren Bereich der Vorsprünge wird die Verbindung des Zentrierrings mit der Nabe und den Reibringen der Wellenbremsscheibe hinsichtlich der bei einem Bremsvorgang auftretenden Drehmomente optimiert.

Bevorzugt ist der Ringkörper aus einem Flachmaterial, insbesondere aus einem Flachstahl, ausgebildet.

Wenn ein Flachmaterial, insbesondere ein Flachstahl, als Ausgangsmaterial bzw. Halbzeug für einen Ringkörper eines Zentrierrings vorgesehen wird, kann der Zentrierring in einfacher Weise und in wenigen Herstellungsschritten hergestellt werden. Zudem gestattet es die Ausbildung des Ringkörpers aus einem Flachmaterial, den Ringkörper eben zu gestalten.

Mit Vorteil kann vorgesehen sein, dass der Ringkörper mit einem Laserstrahlschneidverfahren, einem Wasserstrahlschneidverfahren oder einem thermischen Trennverfahren aus dem Flachmaterial ausgeschnitten ist.

Weiter bevorzugt ist vorgesehen, dass der Ringkörper einen thermischen Ausdehnungskoeffizienten α kleiner als 12·10⁻⁶ K⁻¹, bevorzugt kleiner als 10·10⁻⁶ K⁻¹, weiter bevorzugt kleiner 8·10⁻⁶ K⁻¹, insbesondere bevorzugt kleiner 5·10⁻⁶ K⁻¹, aufweist.

Durch Wahl eines thermischen Ausdehnungskoeffizienten α von zumindest kleiner als 12 x 10⁻⁶ k⁻¹ führt die bei einem Bremsvorgang von den Reibringen auf den Zentrierring bzw. den Ringkörper übertragene Wärme lediglich zu einer geringfügigen thermischen Ausdehnung des Zentrierrings, wodurch die Biegebelastungen auf gegebenenfalls durch Befestigungslöcher des Ringkörpers geführte Verbindungselemente verringert werden.

Bevorzugt weist der Ringkörper im Bereich der Aussparungen Verjüngungen auf, wobei ein Verhältnis der radialen Breite des Ringkörpers im Bereich der Vorsprünge zu der radialen Breite des Ringkörpers im Bereich der Verjüngungen zwischen 5:1 und 15:1, bevorzugt zwischen 8:1 und 12:1 weiter bevorzugt zwischen 9:1 und 10:1 beträgt

Die Verjüngungen im Bereich der Aussparungen entstehen insbesondere dadurch, dass der Innenrand kreisförmig ausgebildet ist, während der Außenrand in etwa wellenförmig In Umfangsrichtung um den Ringkörper herum verläuft und im Bereich der Aussparungen konkav nach innen zum Mittelpunkt des Ringkörpers gerichtete Wellentäler aufweist. Durch die Wellentäler, bzw. die Aussparungen entsteht am tiefsten Punkt der Wellentäler bzw. der Aussparungen ein Bereich einer geringsten radialen Breite Ringkörpers. Dieser Bereich stellt eine Verjüngung im Bereich der Aussparung des Ringkörpers dar. Die Vorsprünge, welche zwischen dem kreisförmigen Innenrand und einem nach radial nach außen gerichteten Wellenberg des Außenrandes ausgebildet bzw. von diesen begrenzt werden, weisen demgegenüber eine maximale radiale Breite auf.

Das Verhältnis der radialen Breiten im Bereich der Vorsprünge und der radialen Breiten im Bereich der Verjüngungen beträgt dabei bevorzugt 5:1 bis 15:1, weiter bevorzugt zwischen 8:1 und 12:1, insbesondere bevorzugt zwischen 9:1 und 10:1. Ganz besonders bevorzugt kann ein Verhältnis der radialen Breiten von 9:1 vorgesehen sein. Bei diesen Verhältnissen der radialen Breiten wird ein optimaler Ausgleich zwischen der Stabilität des Zentrierrings beziehungsweise des Ringkörpers des Zentrierrings und der Gewährleistung einer Erhöhung des Volumenstroms der Kühlluft ermöglicht.

Eine weitere Lösung der der Erfindung zugrundeliegenden Aufgabe besteht in der Bereitstellung einer Wellenbremse für ein Schienenfahrzeug umfassend eine Nabe und zwei Reibringe, wobei über einen Außenumfang der Nabe Nocken angeordnet sind, wobei die Reibringe über Anschlusselemente an den Nocken der Nabe befestigt sind, wobei Verbindungsschrauben durch Löcher in den Nocken und in den Anschlusselementen geführt sind, und wobei ferner die Wellenbremsscheibe einen vorbeschriebenen Zentrierring umfasst, wobei der Zentrierring Befestigungslöcher aufweist, wobei die Anschlusselemente zwischen den Nocken und dem Zentrierring angeordnet sind, und wobei die Verbindungsschrauben durch die Befestigungslöcher des Zentrierrings geführt sind.

Die Anschlusselemente können entweder integraler Bestandteil eines oder beider der Reibringe sein oder die Anschlusselemente können auch als separate Elemente bereitgestellt werden, welche bevorzugt mit einem ersten Bereich zwischen den Reibringen und diese Reibringe miteinander verbindend angeordnet sind und in einem zweiten Bereich, welcher nach innen von den Reibringen in Richtung der Nabe hervorsteht, Löcher zum Durchführen der Verbindungsschrauben aufweisen.

Der Zentrierring, die Anschlusselemente und die Nocken der Nabe sind insbesondere auf Block mittels der Verbindungsschrauben verschraubt. Die Reibringe neigen bei einem Bremsvorgang aufgrund der auftretenden Wärme zu einer radialen Ausdehnung, wodurch Biegespannungen in den Verbindungsschrauben auftreten könnten. Aufgrund des auf der bezüglich der Nocken gegenüberliegenden Seite des Anschlusselemente liegenden Zentrierrings wird dieser Neigung zur thermischen Ausdehnung der Reibringe entgegengewirkt, sodass Biegebelastungen auf die Verbindungsschrauben verringert werden.

Durch die Aussparungen des Zentrierringes kann von der Seite des Zentrierrings Kühlluft in den Zwischenraum zwischen den Reibringen einströmen. Da zudem gleichzeitig Kühlluft von der Seite der Nocken der Nabe in den Zwischenraum zwischen den Reibringen einströmen kann wird eine im Wesentlichen symmetrische Kühlluftströmung im Zwischenraum zwischen den Reibringen und somit eine gleichmäßige Kühlung erhalten.

Ferner wird durch die Maßnahme, dass der Zentrierring Aussparungen aufweist und dass durch diese Aussparungen Kühlluft strömen kann, die Strömungsgeschwindigkeit der Kühlluft im Zwischenraum zwischen den Reibringen erhöht, sodass auch der Volumenstrom der Kühlluft um bis zu 20 % erhöht werden kann. Aufgrund des erhöhten Volumenstroms zeigt sich ein besseren Abkühlverhalten der Reibringe und eine um bis zu 6°C reduzierte Maximaltemperatur der Reibringe bei einem Bremsvorgang.

Der Zentrierring der Wellenbremsscheibe kann ferner sämtliche Merkmal des vorbeschriebenen Zentrierrings aufweisen.

Mit weiterem Vorteil kann vorgesehen sein, dass die Form der Vorsprünge des Zentrierrings im Wesentlichen der Form der Nocken entspricht.

In einer Seitenansicht auf die Wellenbremsscheibe, das heißt in einer Axialrichtung der Nabe gesehen, sind die fluchtend zueinander angeordneten Vorsprünge des Zentrierringes und die Nocken der Nabe in etwas deckungsgleich ausgestaltet. Das heißt, dass auf beiden Seiten, einerseits von der Seite der Nocken und andererseits von der Seite des Zentrierringes, die Öffnungen zum Einströmen der Kühlluft im Wesentlichen identisch ausgestaltet sind, sodass eine im Wesentlichen symmetrische Kühlluftströmung zwischen den Reibringen ausbildbar ist.

Bevorzugt sind die Aussparungen des Zentrierrings derart ausgebildet, dass zwischen einer Außenfläche der Nabe und einem Innenrand mindestens eines der zwei Reibringe Kühlluft durch die Aussparungen zwischen die Reibringe einströmen kann.

Im Gegensatz zu aus dem Stand der Technik bekannten Zentrierringen, welche einen Spalt zwischen einem Innenrand mindestens eines der Reibringe und der Außenfläche der Nabe im Wesentlichen abdecken, werden durch die Aussparung gewissermaßen Kühlluftkanäle geschaffen, durch welche Kühlluft durch den Spalt zwischen der Außenfläche der Nabe und dem Innenrand mindestens eines der Reibringe einströmen kann.

Mit weiterem Vorteil kann vorgesehen sein, dass durch die Aussparungen eine Erhöhung eines Volumenstroms einer Kühlluft um mindestens 10%, bevorzugt mindestens 15%, weiter bevorzugt mindestens 20%, erzielbar ist.

Ferner ist es vorteilhaft, wenn bezügliche einer Mittelebene der Wellenbremsscheibe eine im Wesentlichen symmetrische Strömung der Kühlluft zwischen den Reibringen ausbildbar ist.

Zusätzlich kann vorgesehen sein, dass eine Maximaltemperatur der Reibringe im Betrieb, bevorzugt durch die Erhöhung des Volumenstroms und/oder durch die im Wesentlichen symmetrische Strömung der Kühlluft, um mindestens 2°, bevorzugt um mindestens 4°, weiter bevorzugt um mindestens 6° reduzierbar ist, und/oder dass aufgrund einer im Betrieb reduzierten thermischen Ausdehnung der Reibringe Biegebeanspruchungen der Verbindungsschrauben reduzierbar sind.

### Kurze Beschreibung der Figuren

Die Erfindung wird nachstehend anhand der Figuren näher erläutert.

Es zeigen:
- Fig. 1: eine perspektivische Ansicht einer Wellenbremsscheibe mit einem Zentrierring aus dem Stand der Technik,
- Fig. 2: einen Zentrierring aus dem Stand der Technik,
- Fig. 3: eine Darstellung einer Kühlluftströmung in einer Querschnittsansicht einer Wellenbremsscheibe mit einem Zentrierring aus dem Stand der Technik,
- Fig. 4: einen Zentrierring mit Aussparungen und Vorsprüngen,
- Fig. 5: eine Seitenansicht einer Wellenbremsscheibe mit einem Zentrierring mit Aussparungen und Vorsprüngen,
- Fig. 6: eine perspektivische Schnittansicht einer Wellenbremsscheibe mit einem Zentrierring mit Aussparungen und Vorsprüngen, und
- Fig. 7: eine Darstellung einer Kühlluftströmung in einer Querschnittsansicht einer Wellenbremsscheibe mit einem Zentrierring mit Aussparungen und Vorsprüngen.

### Ausführliche Beschreibung der Figuren

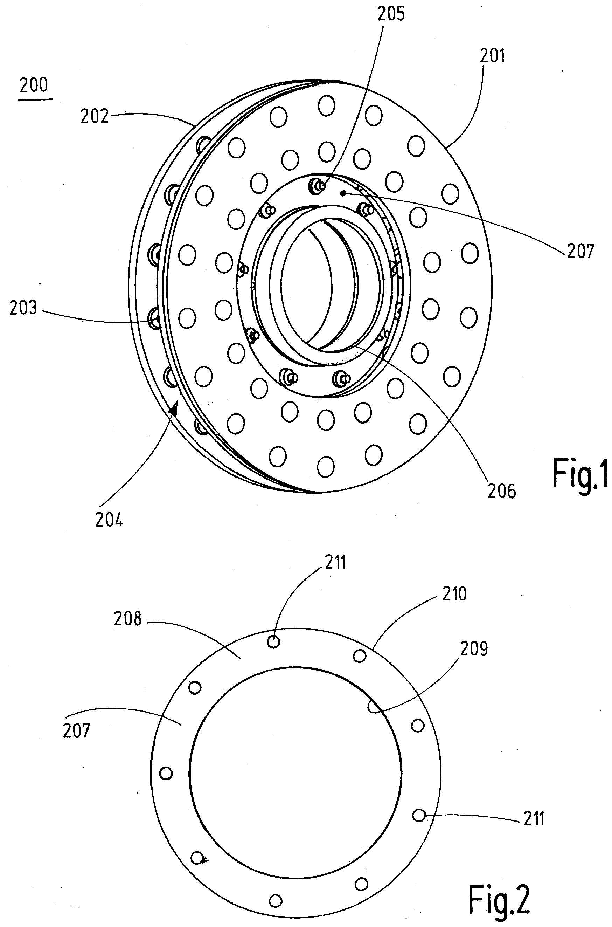

Fig. 1 zeigt eine bekannte Wellenbremsscheibe 200. Die Wellenbremsscheibe 200 umfasst einen ersten Reibring 201 und einen zweiten Reibring 202 auf. Der erste Reibring 201 und der zweite Reibring 202 sind parallel und beabstandet zueinander angeordnet. Zwischen dem ersten Reibring 201 und dem zweiten Reibring 202 sind Stützbolzen 203 angeordnet, welche die Reibringe 201, 202 auf Abstand halten. Durch einen Zwischenraum 204 zwischen dem ersten Reibring 201 und dem zweiten Reibring 202 kann Kühlluft zur Kühlung der Wellenbremsscheibe 200 strömen. Die Reibringe 201, 202 sind ferner über Verbindungsschrauben 205 mit einer Nabe 206 verbunden. Die Wellenbremsscheibe 200 umfasst zudem einen bekannten Zentrierring 207, welcher ebenfalls mittels der Verbindungsschrauben 205 mit der Nabe 206 und den Reibringen 201, 202 verbunden ist.

Fig. 2 zeigt eine Seitenansicht des bekannten Zentrierringes 207. Der Zentrierring 207 weist einen Ringkörper 208 mit einem kreisförmigen Innenrand 209 und einem kreisförmigen Außenrand 210 auf. Über den Umfang des Zentrierrings 207 sind Befestigungslöcher 211 für die Verbindungsschrauben 205 im Ringkörper 208 angeordnet.

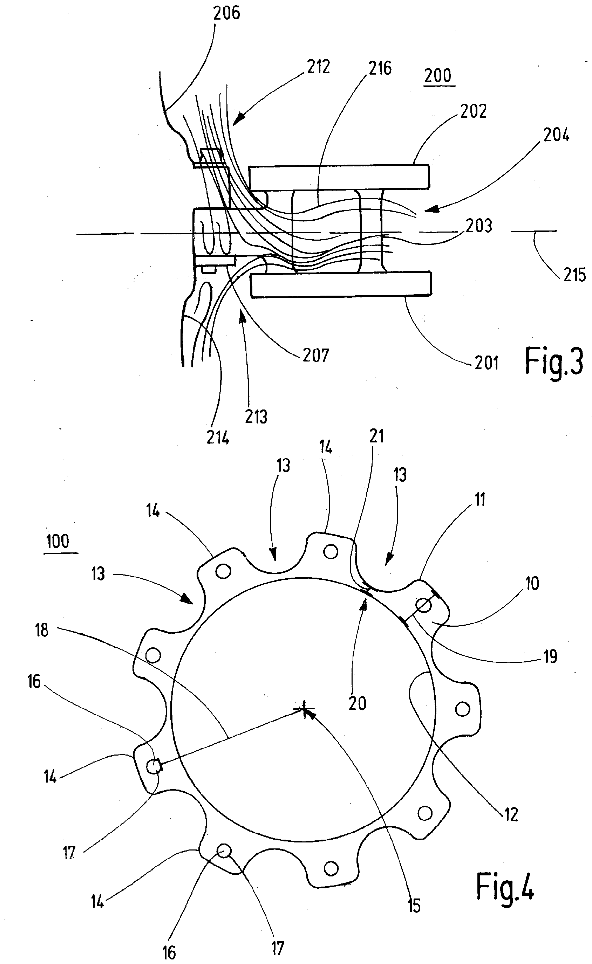

Fig. 3 zeigt einen Querschnitt durch die bekannte Wellenbremsscheibe 200 der Fig. 1. Kühlluft 212 kann im Bereich der Nabe 206 in den Zwischenraum 204 zwischen den ersten Reibring 201 und den zweiten Reibring 202 einströmen. Der bekannte Zentrierringes 207 deckt einen Spalt 213 zwischen dem ersten Reibring 201 und der Außenfläche 214 der Nabe 206 weitgehend ab, so dass nur wenig Kühlluft 212 durch den Spalt 213 in den Zwischenraum 204 von der Seite des Zentrierrings 207 einströmen kann. Es bildet sich daher bezüglich einer Mittelebene 215 unsymmetrische Kühlluftströmung 216 zwischen den Reibringen 201, 202 aus.

Fig. 4 zeigt einen Zentrierring 100 im Einklang mit der Erfindung. Der Zentrierring 100 weist einen Ringkörper 10 mit einem Außenrand 11 und einem Innenrand 12 auf. Der Ringkörper 10 ist eben ausgebildet. Zwischen jeweils zwei über den Außenrand 11 benachbart angeordneten Aussparungen 13 ist je ein Vorsprung 14 angeordnet. Die Aussparungen 13 sind in etwa halbkreisförmig durch konkav nach innen zu einem Mittelpunkt 15 des Ringkörpers 10 gerichtete Bereiche des Außenrands 11 ausgebildet, sodass der Außenrand 11 in Umfangsrichtung in etwa wellenförmig den Ringkörper 10 umläuft. Der dargestellte Zentrierring 100 weist neun Aussparungen 13 und entsprechend neun Vorsprünge 14 auf. In den Vorsprüngen 14 sind Befestigungslöcher 16, welche als Durchgangsbohrungen 17 ausgebildet sind, angeordnet. Je ein Befestigungsloch 16 ist in je einem Vorsprung 14 angeordnet. Alle Befestigungslöcher 16 weisen den gleichen Abstand 18 von dem Mittelpunkt 15 des Ringkörpers 10 auf. Die Befestigungslöcher 16 sind ferner in einer äußeren Hälfte hinsichtlich der radialen Breite 19 des Ringkörpers 10 angeordnet. Aufgrund der Aussparungen 13 bildet sich im Bereich der Aussparung 13 eine Verjüngung 20. Das Verhältnis der radialen Breite 19 der Vorsprünge 14 zu der radialen Breite 21 der Verjüngung 20 beträgt in etwas 9:1.

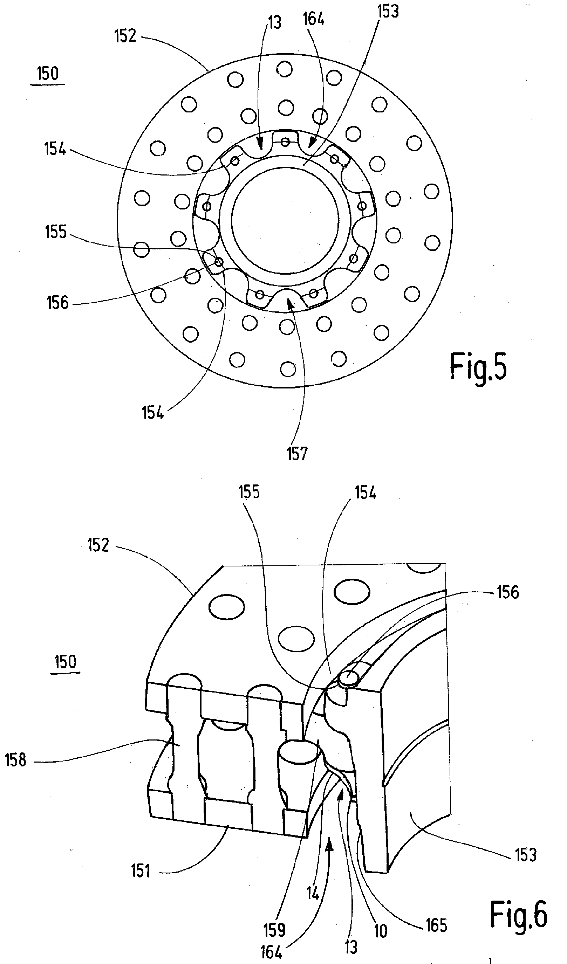

Fig. 5 zeigt eine Seitenansicht einer Wellenbremsscheibe 150 im Einklang mit der Erfindung. Fig. 6 zeigt eine perspektivische Schnittansicht der Wellenbremsscheibe nach Fig. 5. Die Wellenbremsscheibe 150 weist einen ersten Reibring 151 (Fig. 6) und einen zweiten Reibring 152 auf. Ferner weist die Wellenbremsscheibe 150 eine Nabe 153 auf. Die Nabe 153 umfasst Nocken 154. Durch Löcher 155 in den Nocken 154 sind Verbindungsschrauben 156 zur Befestigung der Reibringe 151, 152 an der Nabe 153 geführt. Zwischen den Nocken sind Ausnehmungen 157 (Fig. 5) angeordnet, welche halbkreisförmig ausgebildet sind, und somit von der Form im Wesentlichen identischen zu den Aussparungen 13 des Ringkörpers 10 des Zentrierrings 100 sind (Fig. 4).

Zwischen dem ersten Reibring 151 und dem zweiten Reibring 152 sind Stützbolzen 158 angeordnet, welche den ersten Reibring 151 und den zweiten Reibring 152 zueinander beabstandet halten. Ferner sind zwischen den Reibringen 151, 152 Anschlusselemente 159 vorgesehen. Die Anschlusselemente 159 weisen ebenfalls Löcher für die Verbindungsschrauben 156 zur Befestigung der Reibringe 151, 152 an der Nabe 153 auf. Auf der den Nocken 154 gegenüberliegenden Seite der Anschlusselemente 159 ist der Zentrierring 100 angeordnet, so dass die Anschlusselemente 159 zwischen den Nocken 154 und dem Zentrierring 100 angeordnet sind. Wie in Fig. 6 ebenfalls erkennbar ist, weisen die Vorsprünge 14 des Zentrierrings 100 in etwa die gleiche Form wie die Nocken 154 der Nabe 153 auf. Aufgrund der Aussparungen 13 deckt der Zentrierring 100 den Spalt 164 zwischen dem ersten Reibring 151 und der Außenfläche 165 der Nabe 153 nicht ab.

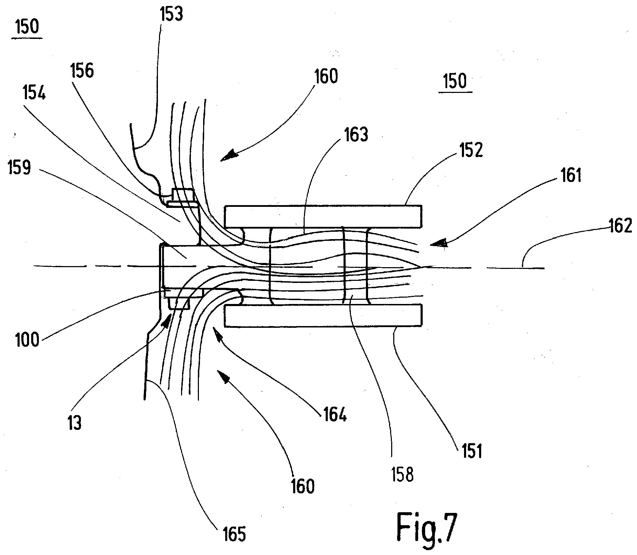

Fig. 7 zeigt einen Querschnitt durch die Wellenbremsscheibe 150. Kühlluft 160 kann sowohl von der Seite der Nocken 154 als auch von der Seite des Zentrierrings 100 in den Zwischenraum 161 zwischen dem ersten Reibring 151 und dem zweiten Reibring 152 einströmen. Aufgrund der im Wesentlichen identischen Formgebung der Aussparungen 13 des Ringkörpers 10 des Zentrierrings 100 und der Ausnehmungen 157 zwischen den Nocken 154 der Nabe 153 bzw. der im Wesentlichen identischen Formgebung der Vorsprünge 14 des Ringkörpers 10 und der Nocken 154 der Nabe 153 kann die Kühlluft 160 von beiden Seiten in den Zwischenraum 161 zwischen dem ersten Reibring 151 und dem zweiten Reibring 152 einströmen, sodass sich eine bezüglich einer Mittelebene 162 im Wesentlichen symmetrische Kühlluftströmung 163 zwischen den Reibringen 151, 152 einstellt. Insbesondere wird der Spalt 164 zwischen dem ersten Reibring 151 und der Außenfläche 165 der Nabe 153 nicht vom Zentrierring 100 abgedeckt.

### Liste der Bezugszeichen

- 100: Zentrierring
- 10: Ringkörper
- 11: Außenrand
- 12: Innenrand
- 13: Aussparung
- 14: Vorsprung
- 15: Mittelpunkt
- 16: Befestigungslöcher
- 17: Durchgangsbohrungen
- 18: Abstand
- 19: Breite
- 20: Verjüngung
- 21: Breite

- 150: Wellenbremsscheibe
- 151: Erster Reibring
- 152: Zweiter Reibring
- 153: Nabe
- 154: Nocken
- 155: Loch
- 156: Verbindungsschrauben
- 157: Ausnehmung
- 158: Stützbolzen
- 159: Anschlusselement
- 160: Kühlluft
- 161: Zwischenraum
- 162: Mittelebene
- 163: Kühlluftströmung
- 164: Spalt
- 165: Außenfläche

- 200: Wellenbremsscheibe
- 201: Erster Reibring
- 202: Zweiter Reibring
- 203: Stützbolzen
- 204: Zwischenraum
- 205: Verbindungsschrauben
- 206: Nabe
- 207: Zentrierring
- 208: Ringkörper
- 209: Innenrand
- 210: Außenrand
- 211: Befestigungslöcher
- 212: Kühlluft
- 213: Spalt
- 214: Außenfläche
- 215: Mittelebene
- 216: Kühlluftströmung

## Patentansprüche

1. Zentrierring (100) für eine Wellenbremsscheibe (150) eines Schienenfahrzeugs, umfassend einen Ringkörper (10) mit einem Außenrand (11) und einem Innenrand (12), wobei der Ringkörper (10) eben ausgebildet, wobei der Ringkörper (10) über den Außenrand (11) verteilt Aussparungen (13) und Vorsprünge (14) aufweist, **dadurch gekennzeichnet, dass** der Ringkörper (10) Befestigungslöcher (16) aufweist, wobei jedes Befestigungsloch (16) in je einem Vorsprung (14) angeordnet ist.

2. Zentrierring (100) nach Anspruch 1, **dadurch gekennzeichnet, dass** zwischen jeweils zwei über den Außenrand (11) benachbart angeordneten Aussparungen (13) je ein Vorsprung (14) ausgebildet ist, und/oder dass die Aussparungen (13) im Wesentlichen halbkreisförmig ausgebildet sind.

3. Zentrierring (100) nach Anspruch 1 oder 2, **dadurch gekennzeichnet, dass** eine ungerade Anzahl an Aussparungen (13) und/oder dass eine ungerade Anzahl an Vorsprüngen (14) vorgesehen ist, und/oder dass mindestens fünf, bevorzugt mindestens sieben, weiter bevorzugt mindestens neun, insbesondere bevorzugt neun, Aussparungen (13) und/oder Vorsprünge (14) vorgesehen sind.

4. Zentrierring (100) nach einem der vorgenannten Ansprüche, **dadurch gekennzeichnet, dass** die Befestigungslöcher (16) Durchgangsbohrungen (17) sind.

5. Zentrierring (100) nach einem der vorgenannten Ansprüche, **dadurch gekennzeichnet, dass** die Befestigungslöcher (16) alle den gleichen Abstand (18) zu einem Mittelpunkt (15) des Ringkörpers (10) aufweisen, und/oder dass die Befestigungslöcher (16) in einem äußeren Bereich der Vorsprünge (14) angeordnet sind.

6. Zentrierring (100) nach einem der vorgenannten Ansprüche, **dadurch gekennzeichnet, dass** der Ringkörper (10) aus einem Flachmaterial, insbesondere aus einem Flachstahl, ausgebildet ist, wobei der Ringkörper (10) bevorzugt mit einem Laserstrahlschneidverfahren, einem Wasserstrahlschneidverfahren oder einem thermischen Trennverfahren aus dem Flachmaterial ausgeschnitten ist.

7. Zentrierring (100) nach einem der vorgenannten Ansprüche, **dadurch gekennzeichnet, dass** der Ringkörper (10) einen thermischen Ausdehnungskoeffizienten α kleiner als 12·10⁻⁶ K⁻¹, bevorzugt kleiner als 10·10⁻⁶ K⁻¹, weiter bevorzugt kleiner 8·10⁻⁶ K⁻¹, insbesondere bevorzugt kleiner 5·10⁻⁶ K⁻¹, aufweist, und/oder dass der Ringkörper (10) im Bereich der Aussparungen (13) Verjüngungen (20) aufweist, wobei ein Verhältnis der radialen Breite (19) des Ringkörpers (10) im Bereich der Vorsprünge (14) zu der radialen Breite (21) des Ringkörpers (10) im Bereich der Verjüngungen (20) zwischen 5:1 und 15:1, bevorzugt zwischen 8:1 und 12:1, weiter bevorzugt zwischen 9:1 und 10:1, beträgt.

8. Wellenbremsscheibe (150) für ein Schienenfahrzeug umfassend eine Nabe (153) und zwei Reibringe (151, 152), wobei über einen Außenumfang der Nabe (153) Nocken (154) angeordnet sind, wobei die Reibringe (151, 152) mittels Anschlusselementen (159) an den Nocken (154) der Nabe (153) befestigt sind, wobei Verbindungsschrauben (156) durch Löcher (155) in den Nocken (154) und in den Anschlusselementen (159) geführt sind, **dadurch gekennzeichnet, dass** die Wellenbremsscheibe einen Zentrierring (100) nach einem der Ansprüche 1 bis 7 umfasst, wobei der Zentrierring (100) Befestigungslöcher (16) aufweist, wobei die Anschlusselemente (159) zwischen den Nocken (154) und dem Zentrierring (100) angeordnet sind, und wobei die Verbindungsschrauben (156) durch die Befestigungslöcher (16) des Zentrierrings (100) geführt sind.

9. Wellenbremsscheibe (150) nach Anspruch 8, **dadurch gekennzeichnet, dass** die Form der Vorsprünge (14) des Zentrierrings (100) im Wesentlichen der Form der Nocken (154) entspricht, und/oder dass die Aussparungen (13) des Zentrierrings (100) derart ausgebildet sind, dass zwischen einer Außenfläche (165) der Nabe (153) und einem Innenrand mindestens eines der zwei Reibringe (151, 152) Kühlluft (160) durch die Aussparungen (13) zwischen die Reibringe (151, 152) einströmen kann, und/oder dass durch die Aussparungen (13) eine Erhöhung eines Volumenstroms einer Kühlluft (160) um mindestens 10%, bevorzugt mindestens 15%, weiter bevorzugt mindestens 20%, erzielbar ist.

10. Wellenbremsscheibe (150) nach Anspruch 8 oder 9, **dadurch gekennzeichnet, dass** bezügliche einer Mittelebene (162) der Wellenbremsscheibe eine im Wesentlichen symmetrische Strömung der Kühlluft (160) zwischen den Reibringen (151, 152) ausbildbar ist, und/oder dass eine Maximaltemperatur der Reibringe (151, 152) im Betrieb, bevorzugt durch die Erhöhung des Volumenstroms und/oder durch die im Wesentlichen symmetrische Strömung der Kühlluft (160), um mindestens 2°, bevorzugt um mindestens 4°, weiter bevorzugt um mindestens 6° reduzierbar ist, und/oder dass aufgrund einer im Betrieb reduzierten thermischen Ausdehnung der Reibringe (151,152) Biegebeanspruchungen der Verbindungsschrauben (156) reduzierbar sind.

## Claims

1. Centering ring (100) for a shaft brake disc (150) of a rail vehicle, comprising an annular body (10) with an outer edge (11) and an inner edge (12), wherein the annular body (10) is formed flat, wherein the annular body (10) has recesses (13) and projections (14) distributed over the outer edge (11), **characterized in that** the ring body (10) has fastening holes (16), wherein each fastening hole (16) is arranged in one projection (14) each.

2. Centering ring (100) according to claim 1, **characterized in that** one projection (14) each is formed between each two recesses (13) arranged adjacently over the outer edge (11), and / or that the recesses (13) are essentially formed semicircular.

3. Centering ring (100) according to claim 1 or 2, **characterized in that** an odd number of recesses (13) and / or **in that** an odd number of projections (14) is provided, and / or that at least five, preferably at least seven, more preferably at least nine, particularly preferably nine, recesses (13) and / or projections (14) are provided.

4. Centering ring (100) according to one of the preceding claims, **characterized in** the fastening holes (16) are through bores (17).

5. Centering ring (100) according to one of the preceding claims, **characterized in that** the fastening holes (16) all have the same distance (18) from a center point (15) of the ring body (10), and / or that the fastening holes (16) are arranged in an outer area of the projections (14).

6. Centering ring (100) according to one of the preceding claims, **characterized in that** the ring body (10) is formed from a flat material, in particular from a flat steel, wherein the ring body (10) is preferably cut out of the flat material using a laser cutting process, a water jet cutting process or a thermal cutting process.

7. Centering ring (100) according to one of the preceding claims, **characterized in that** the ring body (10) has a coefficient of thermal expansion α of less than 12 · 10⁻⁶ K⁻¹, preferably less than 10 · 10⁻⁶ K⁻¹, more preferably less than 8 · 10⁻⁶ K⁻¹, particularly preferably less than 5 · 10⁻⁶ K⁻¹, and / or that the ring body (10) has tapers (20) in the area of the recesses (13), wherein a ratio of the radial width (19) of the ring body (10) in the area of the projections (14) to the radial width (21) of the ring body (10) in the area of the tapers (20) is between 5:1 and 15:1, preferably between 8:1 and 12:1, more preferably between 9:1 and 10:1.

8. Shaft brake disc (150) for a rail vehicle comprising a hub (153) and two friction rings (151, 152), wherein cams (154) are arranged over an outer circumference of the hub (153), wherein the friction rings (151, 152) are attached to the cams (154) of the hub (153) by means of connecting elements (159), wherein connecting screws (156) are guided through holes (155) in the cams (154) and in the connecting elements (159), **characterized in that** the shaft brake disc comprises a centering ring (100) according to one of claims 1 to 7, wherein the centering ring (100) has fastening holes (16), wherein the connecting elements (159) are arranged between the cams (154) and the centering ring (100), and wherein the connecting screws (156) are guided through the fastening holes (16) of the centering ring (100).

9. Shaft brake disc (150) according to claim 8, **characterized in that** the shape of the projections (14) of the centering ring (100) essentially corresponds to the shape of the cams (154), and / or that the recesses (13) of the centering ring (100) are formed in such a way that between an outer surface (165) of the hub (153) and an inner edge at least one of the two friction rings (151, 152) cooling air (160) can flow through the recesses (13) between the friction rings (151, 152), and / or that an increase in a volume flow of a cooling air (160) by at least 10%, preferably at least 15%, more preferably at least 20%, can be achieved by the recesses (13).

10. Shaft brake disc (150) according to claim 8 or 9, **characterized in that** a substantially symmetrical flow of the cooling air (160) between the friction rings (151, 152) can be formed with respect to a center plane (162) of the shaft brake disc, and / or that a maximum temperature of the friction rings (151, 152) can be reduced by at least 2°, preferably by at least 4°, more preferably by at least 6°, during operation, preferably by increasing the volume flow and / or by the essentially symmetrical flow of the cooling air (160), and / or that, due to a reduced thermal expansion of the friction rings (151, 152) during operation, bending stresses on the connecting screws (156) can be reduced.

## Revendications

1. Anneau de centrage (100) pour un disque de frein d'essieu (150) d'un véhicule ferroviaire, comprenant un corps annulaire (10) avec un bord extérieur (11) et un bord intérieur (12), dans lequel le corps annulaire (10) est réalisé de manière plane, dans lequel le corps annulaire (10) présente des évidements (13) et des saillies (14) de manière répartie sur le bord extérieur (11), **caractérisé en ce que** le corps annulaire (10) présente des trous de fixation (16), dans lequel chaque trou de fixation (16) est ménagé respectivement dans une saillie (14).

2. Anneau de centrage (100) selon la revendication 1, **caractérisé en ce que**, entre respectivement deux évidements (13) disposés de manière adjacente sur le bord extérieur (11), respectivement une saillie (14) est formée, et/ou **en ce que** les évidements (13) sont réalisés sensiblement de manière semi-circulaire.

3. Anneau de centrage (100) selon la revendication 1 ou 2, **caractérisé en ce qu'**un nombre impair d'évidements (13) et/ou qu'un nombre impair de saillies (14) est prévu, et/ou **en ce qu'**au moins cinq, de préférence au moins sept, de manière davantage préférée au moins neuf, en particulier de préférence neuf évidements (13) et/ou saillies (14) sont prévu(e)s.

4. Anneau de centrage (100) selon l'une des revendications précédentes, **caractérisé en ce que** les trous de fixation (16) sont des alésages traversants (17).

5. Anneau de centrage (100) selon l'une des revendications précédentes, **caractérisé en ce que** les trous de fixation (16) présentent tous la même distance (18) par rapport à un point central (15) du corps annulaire (10), et/ou **en ce que** les trous de fixation (16) sont ménagés dans une zone extérieure des saillies (14).

6. Anneau de centrage (100) selon l'une des revendications précédentes, **caractérisé en ce que** le corps annulaire (10) est réalisé à partir d'un matériau plat, en particulier à partir d'un acier plat, dans lequel le corps annulaire (10) est de préférence découpé dans un matériau plat avec un procédé de découpage au faisceau laser, un procédé de découpage à jet d'eau, ou un procédé de séparation thermique.

7. Anneau de centrage (100) selon l'une des revendications précédentes, **caractérisé en ce que** le corps annulaire (10) présente un coefficient de dilatation thermique α inférieur à 12·10⁻⁶ K⁻¹, de préférence inférieur à 10·10⁻⁶ K⁻¹, de manière davantage préférée inférieur à 8·10⁻⁶ K⁻¹, en particulier de préférence inférieur à 5·10⁻⁶ K⁻¹, et/ou **en ce que** le corps annulaire (10) présente des rétrécissements (20) dans la zone des évidements (13), dans lequel un rapport entre la largeur radiale (19) du corps annulaire (10) dans la zone des saillies (14) et la largeur radiale (21) du corps annulaire (10) dans la zone des rétrécissements (20) est compris entre 5:1 et 15:1, de préférence entre 8:1 et 12:1, de manière davantage préférée entre 9:1 et 10:1.

8. Disque de frein d'essieu (150) pour un véhicule ferroviaire comprenant un moyeu (153) et deux bagues de friction (151, 152), dans lequel des ergots (154) sont disposés sur une circonférence extérieure du moyeu (153), dans lequel les bagues de friction (151, 152) sont fixées au moyen d'éléments de raccordement (159) aux ergots (154) du moyeu (153), dans lequel on fait passer des vis de liaison (156) à travers des trous (155) dans les ergots (154) et dans les éléments de raccordement (159), **caractérisé en ce que** le disque de frein d'essieu présente un anneau de centrage (100) selon l'une des revendications 1 à 7, dans lequel l'anneau de centrage (100) présente des trous de fixation (16), dans lequel les éléments de raccordement (159) sont disposés entre les ergots (154) et l'anneau de centrage (100), et dans lequel on fait passer les vis de liaison (156) à travers les trous de fixation (16) de l'anneau de centrage (100).

9. Disque de frein d'essieu (150) selon la revendication 8, **caractérisé en ce que** la forme des saillies (14) de l'anneau de centrage (100) correspond sensiblement à la forme des ergots (154), et/ou **en ce que** les évidements (13) de l'anneau de centrage (100) sont réalisés de telle sorte que, entre une surface extérieure (165) du moyeu (153) et un bord intérieur d'au moins l'une des deux bagues de friction (151, 152), de l'air de refroidissement (160) peut affluer à travers les évidements (13) entre les bagues de friction (151, 152), et/ou **en ce que**, grâce aux évidements (13), il est possible d'obtenir une augmentation d'un débit volumique d'air de refroidissement (160) d'au moins 10%, de préférence d'au moins 15%, de manière davantage préférée d'au moins 20%.

10. Disque de frein d'essieu (150) selon la revendication 8 ou 9, **caractérisé en ce que**, par rapport à un plan médian (162) du disque de frein d'essieu, il est possible de former un écoulement sensiblement symétrique de l'air de refroidissement (160) entre les bagues de friction (151, 152), et/ou **en ce qu'**il est possible de réduire une température maximale des bagues de friction (151, 152) lors du fonctionnement, de préférence grâce à l'augmentation du débit volumique et/ou grâce à l'écoulement sensiblement symétrique de l'air de refroidissement (160), de l'ordre d'au moins 2°, de préférence d'au moins 4°, de manière davantage préférée d'au moins 6°, et/ou **en ce qu'**en raison d'une dilatation thermique réduite lors du fonctionnement des bagues de friction (151, 152), il est possible de réduire des efforts de flexion des vis de liaison (156).
